# EUROPÄISCHE PATENTSCHRIFT

(11) **EP 0 901 860 B1**
(45) Veröffentlichungstag und Bekanntmachung des Hinweises auf die Patenterteilung: **31.07.2002**
(21) Anmeldenummer: 98810853.6
(22) Anmeldetag: 28.08.1998
(51) Int. Cl.: B23B 51/08

(54) **Mehrschneidiger Bohrer**
Drill with multiple cutting edges
Foret avec plusieurs arêtes de coupe

(30) Priorität: 09.09.1997 CH 210497
(43) Veröffentlichungstag der Anmeldung: 17.03.1999
(73) Patentinhaber: Sphinx Werkzeuge AG, 4562 Biberist (CH)
(72) Erfinder: Friedli, Paul, 4522 Rüttenen (CH); Studer, Hans, 4626 Niederbuchsiten (CH); Rüttimann, Reto, CH-4565 Recherswil (CH); Arnold, Martin, CH-4573 Lohn-Ammannsegg (CH)

(56) Entgegenhaltungen:
- DE-C- 4 421 922

## Beschreibung

Die Erfindung bezieht sich auf ein mehrschneidiges, geradegenutetes Hochgeschwindigkeits-Bohrwerkzeug, das als kombiniertes Zentrier-, Bohr-, Reib- und Glättwerkzeug Verwendung finden kann.

Es erfüllt die heutzutage geforderten hohen Anforderungen in bezug auf Schnittgeschwindigkeiten (HSC; High Speed-Cutting) insbesondere bei der Bearbeitung von Aluminium, Gusseisen, Kupferlegierungen und Graphit. Derartige Werkzeuge müssen in der Lage sein, Bohrungen von hoher Massgenauigkeit (innerhalb IT 5), Oberflächengüte, Kreisformgenauigkeit und Geradheit herzustellen und das in Bohrtiefen ins volle Werkstückmaterial, die bis zu zehnmal dem Bohrerdurchmesser entsprechen.

Es sind geradegenutete Werkzeuge, mit
- mehreren Hauptschneiden, vorzugsweise zwei mit Bohrdurchmesser D1, zur axialen Spanabtragung
- und mit mehreren geraden, axialen Spannuten, vorzugsweise zwei
- und mit zwei axialen, inneren Kühlschmierstoffmittel-Kanälen
- und mit mehreren den Hauptschneiden nachlaufenden Schlichtschneiden
bekannt.

Ein Bohrer mit den Merkmalen des Oberbegriffs des Anspruchs 1 ist beispielsweise in der DE 44 21 922 C1 beschrieben.

Diese Werkzeuge haben aber den grossen Nachteil, dass die Bohrungswandung nicht geglättet ist. Dazu kommt die mangelhafte Abstützung des Werkzeuges während dem Bohren ins Volle, was schlechte Stabilisierungseigenschaften zur Folge haben kann, die dann zu erhöhten Vibratitonen am Werkzeugkopf führen und zu Mikroausbrüchen an den kritischen Stellen führen können. Das Resultat dieser Mikrovibrationen ist dann ein vorzeitiges Erliegen des im Einsatz befindlichen Werkzeugs.

Um diesen Nachteilen, unglatte Bohrungswandung, Mikroausbrüchen und frühzeitiger Erliegepunkt des Werkzeugs zu begegnen wurde dazu übergegangen, mit mehreren, vorzugsweise zwei, den Schlichtschneiden nachlaufenden Nachglättfasen, die oben genannten Nachteile zu beseitigen bzw. zumindest zu verringern.

Die Nachglättfasen, die vorzugsweise mit einer diamant-ähnlichen Hartschicht belegt sind, glättet die innere Wand der gebohrten Bohrung und erzeugt eine Oberflächengüte mit dem Rauhwert Ra = 0,05 µm.

Die Nachglättfase wiederum, arbeitet wie ein Glättwerkzeug durch plastische Verformung der Bohrungswand, die Oberflächentopographie wird nivelliert.

Zerspanungsversuche in einer Aluminiumlegierung AC100, Werkstofftyp AlMg Si0,8 bestätigen, die der Erfindung zugrunde gelegten Merkmalen in den Ansprüchen 1 bis 16.

Die Versuchsbedingungen waren:
Bohrer-Ist-Durchmesser 10,003 mm
Schnittgeschwindigkeit Vc = 314 m/min.
Vorschub f = 0,15 mm/min. bzw. f' = 1500 mm/min.
Kühlschmierstoff: Oel
Bohrdicke: 30 mm
Durchgehende Bohrung

### Auswertung:

Nach einer Standzeit von 300 Meter war das Werkzeug immer noch intakt.
Bohrungsmass 10,006 - 10,012 mm
Grösste Rundheitsabweichung 0,005 mm
Grösste Geradheitsabweichung 0,004 mm
Bohrungswand mit einer Oberflächengüte mit Rauhwert Ra 0,15 µm
Bohrungswandaspekt: spiegelig

Im folgenden werden bevorzugte Ausführungsbeispiele der Erfindung anhand der beigefügten Zeichnung näher erläutert.
- Fig. 1: eine perspektivische Ansicht der mehrschneidig ausgebildeten Vorrichtung zum Kombinationsbohren
- Fig. 2: eine vergrösserte Stirnansicht der in Fig. 1 gezeigten Vorrichtung
- Fig. 3: einen Radialschnitt B...B' der in Fig. 1 dargestellten Vorrichtung zum Kombinationsbohren

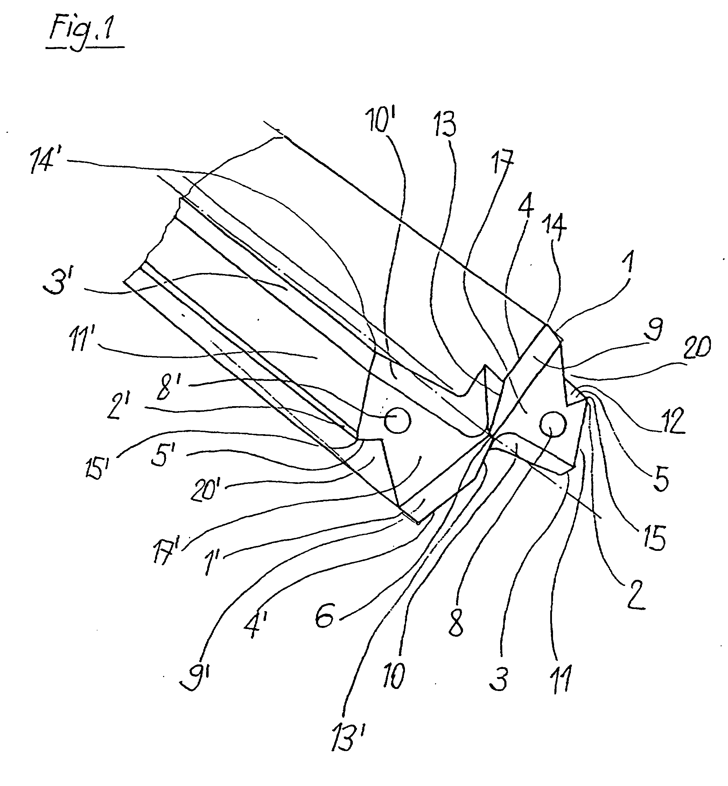

Fig. 1 veranschaulicht eine bevorzugte Ausführungsform der erfindungsgemässen mehrschneidigen Vorrichtung zum Kombinationsbohrem.

Die Querschneide (6) sorgt für ein einwandfreies Zentrieren ins volle Werkstückmaterial. Die Bohrerstege (17,17') umfassen die Hauptschneiden (4,4') mit den dazugehörenden Führungsfasen (1,1'), die L-förmigen Ausnehmungen (21,21'), den Schlichtschneiden (5,5') mit den dazugehörenden Schlichtfasen (2,2'), der Rückenfreifläche (11,11') und den entscheidenden nachlaufenden Nachglättfasen (3,3')

In den Bohrstegen (17,17') sind die axial gerichteten parallelen Kühlmittel-Bohrungen (8,8') angeordnet, die zu den beiden Stirnseiten des Bohrers hin geöffnet sind. Einerseits muss das Kühlschmiermittel die Hauptschneiden (4,4'), die Schlichtschneiden (5,5'), die Nachglättfasen kühlen und schmieren und andererseits muss die Flüssigkeit durch die Spannuten (7,7') abfliessen und gleichzeitig die Späne abtransportieren.

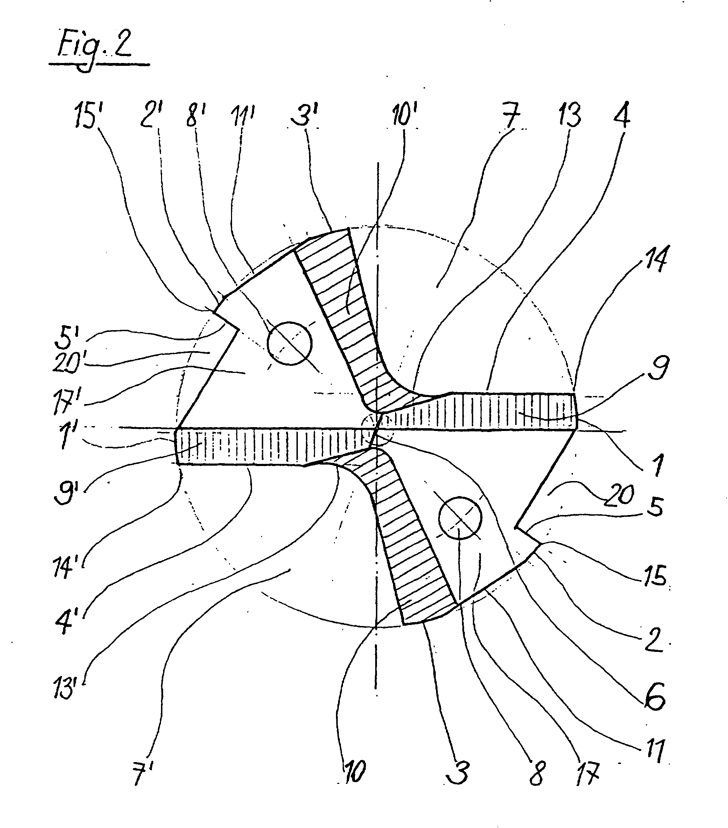

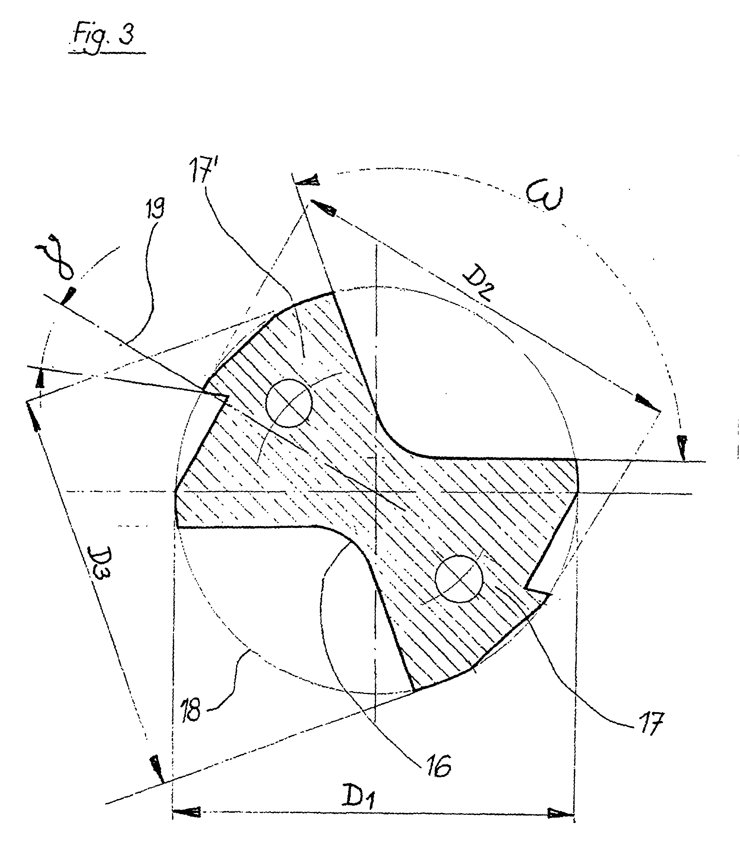

Aus der Fig. 2 und noch genauer aus der Fig. 3 sind die drei Bereiche mit den Hauptschneiden (4,4'), den Schlichtschneiden (5,5') und den entscheidenden Nachglättfasen (3,3') ersichtlich. Durch die Hauptschneiden (4,4') mit ihren dazugehörigen Führungsfasen (1,1') und den Schlichtschneiden (5,5') mit ihren dazugehörigen Schlichfführungsfasen (2,2') wird die Bohrungsinnenwand derart vorbereitet, dass die nachlaufenden Nachglättfasen (3,3') auf der Bohrungswand eine nivellierte, spiegelige Oberfläche erzeugen. Die insgesamt sechs unterschiedlichen peripheren Führungen, vier davon sind schneidend und zwei davon drückend, verbessern die Konzentrizität beim Bohren und erhöhen zugleich die Stabilität des Schneidvorganges erheblich.

Die innere Wand der Bohrung wird durch die Hauptschneiden (4,4') gebohrt und durch die Schlichtschneiden (5,5') weiter geschlichtet und für das Nachglätten mit den Nachglätffasen (3,3') vorbereitet.

Die Hauptschneiden (3,3'), die Schlichtschneiden (5,5') und die Nachglätffasen (3,3') liegen konzentrisch zueinander auf ein- und demselben Bohrkörper, so dass in einem Arbeitsgang eine glatte Oberfläche erreicht wird. Die Bohr-, Reib- und Glättvorgänge werden zusammengefasst. Die Bearbeitung benötigt nur einen Durchgang. Entsprechend kurz ist die Prozesszeit, die Durchlaufzeit wird verkürzt.

Die Materialmenge, die nach dem ersten Bohrvorgang beim Schlichten der Bohrung entfernt werden muss ist sehr gering, für das nachfolgende Glätten durch plastische Umformung extrem gering.

## Patentansprüche

1. Mehrschneidig ausgebildete Vorrichtung zum Kombinationsbohren, welche diametral zueinander angeordnetet und durch einen Bohrerkern (16) in Umfangsrichtung im Abstand zueinander angeordnete Hauptschneiden (4,4') aufweist, die mindestens eine peripher angeordnete Führungsfase (1,1') aufweist, wobei der Bohrerkem (16) in bezug zu der als Querschneide (6) ausgebildeten Zentrierspitze mit Querschneide (6) in einen mit den Hauptschneiden (4,4') und den nachlaufenden Schlichtschneiden (5,5') versehenen Bohrersteg (17,17') unterteilt ist, wobei der Bereich der Bohrstege (17,17') eine Hauptschneide (4,4') mit Führungsfase (1,1'), eine nachlaufende Schlichtschneide (5,5') und eine stützende Nachglättfase (3,3'), die durch die Rückenfläche (11,11') von der Schlichtschneide (5,5') getrennt ist, aufweist, **dadurch gekennzeichnet, daß** der Schlichtschneide (5,5') und der Rückenfläche (11,11') eine Nachglättfase (3,3') folgt, die breiter ist als die Führungsfase (1,1') der Hauptschneide (4,4').

2. Vorrichtung nach Anspruch 1, **dadurch gekennzeichnet, dass** die Nachglättfase (3,3') um 50% oder mehr breiter ist als die Führungsfase der Hauptschneide

3. Vorrichtung nach Anspruch 1, **dadurch gekennzeichnet, dass** die Schlichtführungsfase (2,2') in der Breite wesentlich kleiner ist als die Führungsfase (1,1'), vorzugsweise ein Zehntel davon.

4. Vorrichtung nach Anspruch 1, **dadurch gekennzeichnet, dass** die Bohrerstege (17,17') mit einem Kühlmittelkanal (8,8') versehen sind.

5. Vorrichtung nach Anspruch 1, **dadurch gekennzeichnet, dass** die Schlichtschneidenfase (2,2') auf einem Durchmesser (D2) liegt, der grösser ist als der Durchmesser (D1), vorzugsweise um 1 ‰.

6. Vorrichtung nach Anspruch 1, **dadurch gekennzeichnet, dass** der Durchmesser (D3) der Nachglättfasen (3,3') mindestens gleich dem Durchmesser D2 der Schlichtschneiden (2,2') ist, oder grösser ist als D2, vorzugsweise um 0,5 ‰.

7. Vorrichtung nach Anspruch 1, **dadurch gekennzeichnet, dass** zwischen den Schlichtführungsfasen (2,2') und der Nachglättfasen (3,3') eine Rückenfreifläche (11,11') angeordnet ist, die stufenlos in die Schlichtführungsfase (2,2') und in die Nachglättfase (3,3') übergeht.

8. Vorrichtung nach Anspruch 1, **dadurch gekennzeichnet, dass** ein positiver Rückspanwinkel (8) entsteht, vorzugsweise um 8°.

9. Vorrichtung nach Anspruch 1, **dadurch gekennzeichnet, dass** der Spannutwinkel (ω) zwischen 90° und 120° liegt.

10. Vorrichtung nach Anspruch 1, **dadurch gekennzeichnet, dass** die abgeknickte Querschneidenlänge (13,13') kürzer ist als die Hauptschneidenlänge (4,4'), vorzugsweise um die 30%.

11. Vorrichtung nach Anspruch 1, **dadurch gekennzeichnet, dass** die Nachglättfasen (3,3') mit einer superharten diamantartigen Schicht mit einem Trockenreibwert unter 0,2 belegt ist.

12. Vorrichtung nach Anspruch 1, **dadurch gekennzeichnet, dass** die drei Arbeitssektoren, Bohren, Reiben und Glätten stets in der Reihenfolge Hauptschneiden (4,4'), Schlichtschneiden (5,5') und Nachglättfasen (3,3') in den Bohrerstegen (17,17') integriert sind.

13. Vorrichtung nach Anspruch 1, **dadurch gekennzeichnet, dass** die Schlichtschneide (5,5') in der Mitte der Bohrerstege (17,17') liegt.

14. Vorrichtung nach Anspruch 1, **dadurch gekennzeichnet, dass** die Schlichtschneidenecke (15,15') um 5-30° von der Hauptschneidenecke (14,14') versetzt ist.

15. Verwendung der Vorrichtung nach einem der Ansprüche 1...14 zum Bohren von Leichtmetallen.

16. Verwendung der Vorrichtung nach dem Anspruch 15, **dadurch gekennzeichnet, dass** das Leichtmetall Aluminium ist.

## Claims

1. A multicutting device for combined drilling , which has with respect to the direction of rotation of the drill, a pair of main-cutting-lips (4,4') diametrically situated , extending from the chisel edge (6) to the periphery, each of it has a cylidrical portion of the land (17,17') the margin (1,1'), connected to the central portion of the body the web (16), the described device with web (16), consists of a chisel-edge (6) the end of the web that joins the end of the lands (17,17') as a centerpoint and connects the main-cutting-lips (4,4') and the reaming-cutting-lips (2,2') incorporated in the land (17,17') the peripheral portion of the drill body between adjacent flutes , whereby the portion of the land (17,17') consists of the main-cutting-lips (4,4') with margin (1,1'), followed by reaming-cutting-lips (2,2') and the burnishing-pads (3,3'), **characterised by** the fact, that between the reaming-cutting-lips (2,2') and the clearance-face (11,11') follows with respect to the direction of rotation the bumishing-pads (3,3'), which are substantial larger than the margins (1,1') of the main- cutting-lips (4,4').

2. A device as defined in claim 1, **characterised by** the fact, that the burnishing-pad (3,3') is larger by 50% or more than the margin (1,1') of the main-cutting-lips (4,4').

3. A device as defined in claim 1, **characterised by** the fact , that the reaming - margin (2,2') is substantially smaller in largness than the margin (1,1') preferably by 10% of it.

4. A device as defined in claim 1, **characterised by** the fact, that the land (17,17') is having a coolant-hole (8,8').

5. A device as defined in claim 1, **characterised by** the fact, that the reaming - cutting-lip (2,2') on diameter (D2) is larger than the drill-diameter (D1), preferably by 1‰.

6. A device as defined in claim 1, **characterised by** the fact, that the diameter (D3) over the burnishing-pads (3,3') is at least equal diameter (D2) over the reaming - cutting-lip (2,2'), or larger than (D2), preferably by 0,50‰.

7. Device as defined in 1, **characterised by** the fact, that a clearance face (11,11') is arranged between the reaming margins (2,2') and the burnishing pads (3,3'), which ridgelessly turns into the reaming margin (2,2') and into the burnishing pad (3,3').

8. Device as defined in claim 1, **characterised by** the fact, that a positive tool back wedge angle (8) is created, preferably of 8°.

9. Device as defined in claim 1, **characterised by** the fact, that the flute angle (ω) is between 90° and 120°.

10. Device as defined in claim 1, **characterised by** the fact, that the length of the snapped-off chisel edge (13,13') is shorter than the length of the main cutting lips (4,4'), preferably by about 30 %.

11. Device as defined in claim 1, **characterised by** the fact, that the burnishing pads (3,3') are coated with a super-hard, diamond-like layer with a friction value when dry of under 0.2.

12. Device as defined in claim 1, **characterised by** the fact, that the three work sectors, drilling, friction and smoothing are integrated in the drill lands (17,17') in the following sequence: main cutting lips (4,4'), reaming cutting lips (5,5') and burnishing pads (3,3').

13. Device as defined in claim 1, **characterised by** the fact, that reaming cuffing lip (5,5') is situated in the centre of the drill lands (17,17').

14. Device as defined in claim 1, **characterised by** the fact, that the angle of the reaming cutting lip (15,15') is being set at 5 - 30° to the angle of the main cutting lip (14,14').

15. Use of the device as defined in one of the claims 1 ... 14 for the drilling of light metals.

16. Use of the device as defined in claim 15, **characterised by** the fact, that the light metal is aluminium.

## Revendications

1. Un dispositif multi-coupe pour le percage combiné , qui a une paire de tranchant principal (4,4'), qui va de l'arête centrale (6) à la péripherie, chacune a une partie cylindrique , un listel primaire (1,1'), relié à l'ame (16) ,
ladite dispositif avec une ame (16), qui a relatif au tranchant principal (4,4 ) une arête centrale (6) qui fait le centrage et en plus la connexion avec le tranchant principal (4,4') et du tranchant alésoir (5,5') avec listel alésoir (2,2') qui fait partie de l'aile du foret (17,17'), cela veut dire que dans la partie de l'aile (17,17'), le tranchant principal (4,4') avec le listel primaire (1,1') est suivit par le tranchant alésoir (5,5') avec listel alésoir (2,2') et par le listel de lissage (3,3') qui fonctionne comme support de l'outil le listel alésoir (2,2') et le listel de lissage (3,3') sont séparés par la face du dégagement (11,11'), **caractérisé par le fait que** ledit tranchant alésoir (5,5 ) avec listel alésoir (2,2') et de la face du dégagement (11,11) suit le listel de lissage (3,3'), qui est plus large que le listel primaire (1,1 ) du tranchant principal (4,4').

2. Un dispositif selon la revendication 1, **caractérisé par le fait que** le listel de lissage (3,3') est plus large de l'ordre de 50% ou plus que le listel primaire (1,1').

3. Un dispositif selon la revendication 1, **caractérisé par le fait que** le listel alésoir (2,2') est sensiblement plus petit que le listel primaire (1,1'), de préférence de l'ordre de 10% .

4. Un dispositif selon la revendication 1, **caractérisé par le fait que** chaque aile (17,17') possède un trous d'huil (8,8').

5. Un dispositif selon la revendication 1, **caractérisé par le fait que** le listel alésoir (2,2') est sur un dimètre (D2), qui est plus grand que le diamètre (D1), de préférence de l'ordre de 1‰.

6. Un dispositif selon la revendication 1, **caractérisé par le fait que** le dimètre (D3) sur les listels de lissage (3,3') est au moins égal au diamètre (D2) des listels alésoir (2,2') ou plus grand que le diamètre (D2), de préférence de l'ordre de 0,50‰.

7. Un dispositif selon la revendication 1, **caractérisé par le fait qu'**entre les listels alésoirs (2,2') et les listels de lissage (3,3'), se trouve une face de dégagement (11,11'), qui passe en continu dans le listel alésoir (2,2') et le listel de lissage (3,3').

8. Un dispositif selon la revendication 1, **caractérisé par le fait qu'**il se forme un angle positif de coupe (8), de 8° de préférence.

9. Un dispositif selon la revendication 1, **caractérisé par le fait que** l'angle de goujure (ω) se situe entre 90° et 120°.

10. Un dispositif selon la revendication 1, **caractérisé par le fait que** la longueur de l'arête centrale (13,13') soit plus courte que la longueur des tranchants principaux (4,4'), de 30% de préférence.

11. Un dispositif selon la revendication 1, **caractérisé par le fait que** les listels de lissage (3,3') soient recouverts d'une couche ultradure, comme du diamant, d'un coefficient de frottement à sec inférieur à 0,2.

12. Un dispositif selon la revendication 1, **caractérisé par le fait que** les trois secteurs de travail, perçage, frottage et lissage soient constamment intégrés dans l'ordre tranchants principaux (4,4'), tranchants alésoirs (5,5') et listels de lissage (3,3') dans les ailes de foret (17,17').

13. Un dispositif selon la revendication 1, **caractérisé par le fait que** les tranchants alésoirs (5,5') soient situés au centre des ailes de foret (17,17').

14. Un dispositif selon la revendication 1, **caractérisé par le fait que** l'angle des tranchants alésoirs (15,15') soit décalé de 5-30° par rapport à l'angle des tranchants principaux (4,4').

15. Utilisation du dispositif selon l'une des revendications 1-14 pour le perçage de métaux légers.

16. Utilisation du dispositif selon la revendication 15, **caractérisé par le fait que** le métal léger soit de l'aluminium.
